# EUROPEAN PATENT SPECIFICATION

(11) **EP 4 007 680 B1**
(45) Date of publication and mention of the grant of the patent: **12.02.2025**
(21) Application number: 20771934.5
(22) Date of filing: 28.08.2020
(51) Int. Cl.: B25J 11/00, A47J 44/00, A23L 5/00, B25J 15/04

(54) **A ROBOTIC COOKING SYSTEM**
ROBOTER-KOCHSYSTEM
SYSTÈME DE CUISSON ROBOTISÉ

(30) Priority: 03.10.2019 LV 190052
(43) Date of publication of application: 08.06.2022
(73) Proprietor: Roboeatz, Sia, 1012 Riga (LV)
(72) Inventor: PORUKS, Janis, 1006 Riga (LV); KORCJOMKINS, Konstantins, 1010 Riga (LV)
(74) Representative: Fortuna, Jevgenijs
(86) International application number: PCT/LV2020/050002
(87) International publication number: WO 2021/066637

(56) References cited:
- EP-A1- 2 767 197
- CN-U- 202 858 799
- US-A- 5 197 846
- US-A1- 2005 193 901
- US-A1- 2018 070 776
- US-A1- 2019 125 126

## Description

### Technical Field

The invention relates to automatic cooking devices and systems, in particular, robotic systems for preparing meals.

### Background Art

Ready-made meal manufacturers, fast-food restaurants and catering services providers are facing tightening margins and increased demand for flexibility and food safety. Robotic cooking systems become a solution for such growing demands.

There is known a cooker (EP 0458977 B1), having a receptacle, the receptacle comprising a pot for holding ingredients, a heater for induction heating said pot and means for rotating the pot, said receptacle being supported by a main unit so that it can be inclined freely, wherein the cooker further comprises an angle control unit, which provides driving force for inclining said receptacle and a controller for controlling said angle control unit.

There is known an automatic cooking device (GB 2521999 A), comprising a housing, having an ingredients storage means, which has containers and a controllable dispensing means located in the base of each container; the dispensing means are designed to dispense ingredients into a mixing unit provided below the ingredients storage means. The mixing chamber has a controllable outlet in its base to dispense ingredients downwards into a cooking pot. A heater means cooks the ingredients in the cooking pot. The device further optionally comprises an automated cleaning means having multiple nozzles.

There is known a robotic cooking system (US 7174830 B1), comprising one or more robots having means to move food containers between multiple positions and means to stir food within a cooking pan, a food storage and selection area, a cooking area within a range of motion of the robot, at least one food container containing food ingredients and a loading conveyor to move the food container to the cooking area; the robot is configured to move food ingredients from the loading conveyor into a cooking pan, held by the robot in a position over a cooking element in the cooking area. The robot uses the means to move food containers to unload food into a serving dish, which is moved by a conveyor to a serving area.

There is known a food preparation system (US 8276505 B2), comprising a housing comprising a wall; a control subsystem configured to control a plurality of food preparation processes capable of preparing a meal comprising a variety of foods based on user selection of the foods; plurality of ingredient storage containers comprising dry ingredient storage containers and liquid ingredient storage containers; a storage module configured to store the ingredient storage containers and a variety of ingredients contained within the ingredient storage containers for an extended period; an ingredient manipulator configured to access and remove a plurality of ingredients from the ingredient storage containers, as commanded by the control subsystem; a cooking receptacle disposed within the housing, the cooking receptacle being configured to cook ingredients placed therein by the ingredient manipulator; a dish and food transfer area; and a cleaning subsystem configured to clean the cooking receptacle and the surface of the wall of the housing.

There is known an automated meal production system (US 10154762 B2), comprising a plurality of ingredient holding and dispensing assemblies, each of the ingredient holding and dispensing assemblies comprising a container for holding a supply of an ingredient and a dispenser for dispensing an amount of the ingredient from a discharge of the ingredient holding and dispensing assembly and a plurality of heating and mixing assemblies which each comprise a heating pot configured for rotating the heating pot about its longitudinal rotational axis, each of the heating pots comprising an opening at an outer end of the heating pot through which the ingredients dispensed by one or more of the ingredient holding and dispensing assemblies are delivered into the heating pot; a side wall which extends longitudinally from the closed base end and surrounds the longitudinal rotational axis; a heating cavity within the heating pot which is surrounded by the side wall, and an interior surface of the side wall which is within and which surrounds the heating cavity, each of the heating pots also comprising an internal mixing fin structure which runs longitudinally along and is formed on or attached to the interior surface of side wall so that the internal mixing fin structure projects from the interior surface of the side wall into the heating cavity, the mixing fin structure of each of the heating pots is carried by the side wall when the heating pot rotates about the longitudinal rotational axis so that the mixing fin structure revolves around the longitudinal rotational axis, and the heating pot of each of the heating and mixing assemblies also being configured for pivoting the heating pot about a secondary axis between an upward ingredient receiving orientation, a heating and mixing orientation which is pivoted downwardly from the upward ingredient receiving orientation to an angle which is not more than 90° from vertical; and a dispensing orientation which is pivoted downwardly from the heating and mixing orientation to an angle which is not more than 180° from vertical.

Although the prior art solutions partially solve the problem, their effectiveness is still relatively insufficient.

### Summary of Invention

The invention provides a robotic cooking system, comprising: a robotic arm with a controller and a motor drive unit, an end of arm tool comprising a gripper, a rotary drive; a plurality of ingredient holding and dispensing assemblies, each of the ingredient holding and dispensing assemblies comprising a container for holding a supply of an ingredient and dispenser for dispensing an amount of the ingredient from a discharge of the ingredient holding and dispensing assembly; a cooking receptacle, being configured to cook food ingredients placed therein; dishes storing device; a tray adapted to receive food ingredients from the dispenser and designed to be releasably gripped by the gripper; a dish and food transfer area having at least one compartment, comprising an internal access door, an external access door and at least one surface adapted for placing a dish or food; a cleaning subsystem configured to clean the cooking receptacle and the tray; optionally, a trash compartment. The end of arm tool is further provided with a rotary drive adapted to be releasably engaged with the engagement means of a plurality of the containers for holding a supply of an ingredient designed so that at the engaged position the rotation of the rotary drive of the robotic arm causes the dispenser to dispense an amount of the ingredient from the discharge of the ingredient holding and dispensing assembly. The rotary drive is provided with a flexible coupling adapted to compensate misalignment and/or ensure easy entering of the end of the engaging part of the rotary drive to the engagement means of a plurality of containers. The end of arm tool is further provided with one or more air nozzles directed towards the inner part of the tray, so to create air flow along the surface of the tray towards a discharge edge of the tray to facilitate discharging food ingredients from the tray. The proposed design of the robotic cooking system allows to avoid using number of motors in each container for holding a supply of an ingredient as a motor on the robotic arm, operably connected with the rotary drive of the robotic arm, after engagement with the engagement means on the containers causes the dispenser to dispense an amount of the ingredient. This, in turn, allows to simplify construction and makes less expensive the robotic cooking system.

According to another embodiment the subset of the plurality of ingredient holding and dispensing assemblies comprises a container with the dispenser and a screw conveyor, adapted to controllably move fluent solid ingredients in the container towards the dispenser, wherein the screw conveyor comprises two helically bladed screws: a central screw and a peripheral screw, the peripheral screw located around the central screw, both screws having the same rotational axis; wherein the helical blades of the screws have opposite directions. This solution prevents compaction and pressing of the ingredients in the container.

Favorably, the tray is designed to have two parallel substantially vertical walls and two substantially inclined walls; where the two inclined walls, together with the tray's bottom form an arc, preferably a parabolic arc. This advantageously allows to create air flow paths along the surface of the tray towards a discharge edge of the tray and thus, to facilitate discharging food ingredients from the tray.

### Brief Description of Drawings

Fig. 1 shows a perspective view of the robotic arm with end of arm tool;
Fig. 2 - is a frontal view of the plurality of ingredient holding and dispensing assemblies;
Fig. 3 - a perspective view of the cooking receptacle with part of the cleaning subsystem adapted to clean the cooking receptacle;
Fig. 4 - a perspective view of the dishes storing device;
Fig. 5 - a perspective view of the end of arm tool with gripper holding the tray;
Fig. 6 - a perspective view of the container adapted for holding a supply of solid ingredients;
Fig. 7 - a perspective view of part of the container adapted for holding a supply of solid ingredients, showing the screw conveyor;
Fig. 8 - a top view of the container adapted for holding a supply of solid ingredients;
Fig. 9 - a perspective view of the container adapted for holding a supply of liquid ingredients or viscous substance;
Fig. 10 - a perspective view of the dish and food transfer area;
Fig. 11 - a perspective view of the cleaning subsystem adapted to clean the tray.

### Detailed Description of Invention

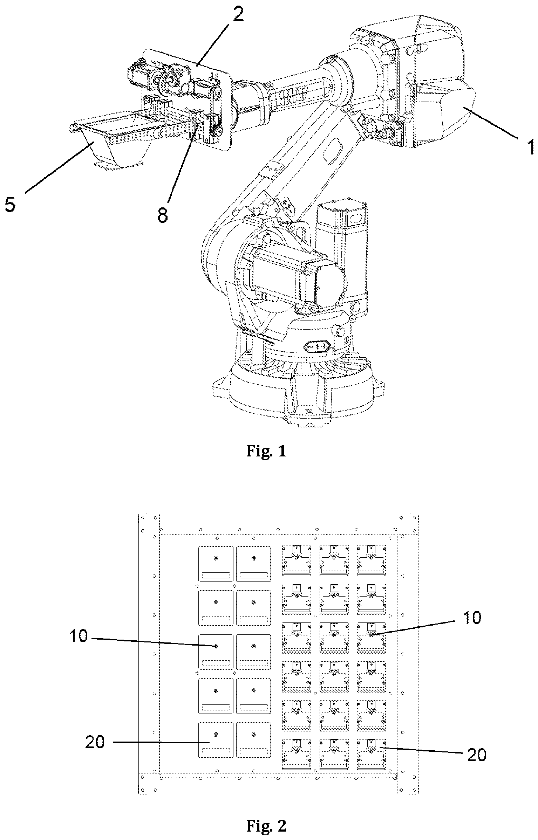

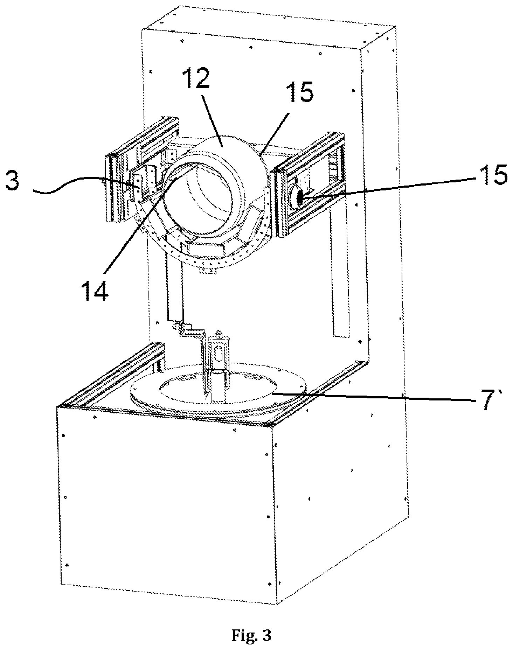

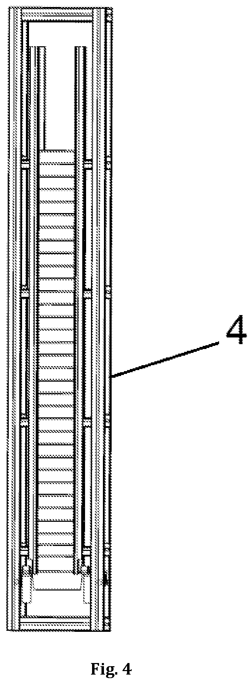

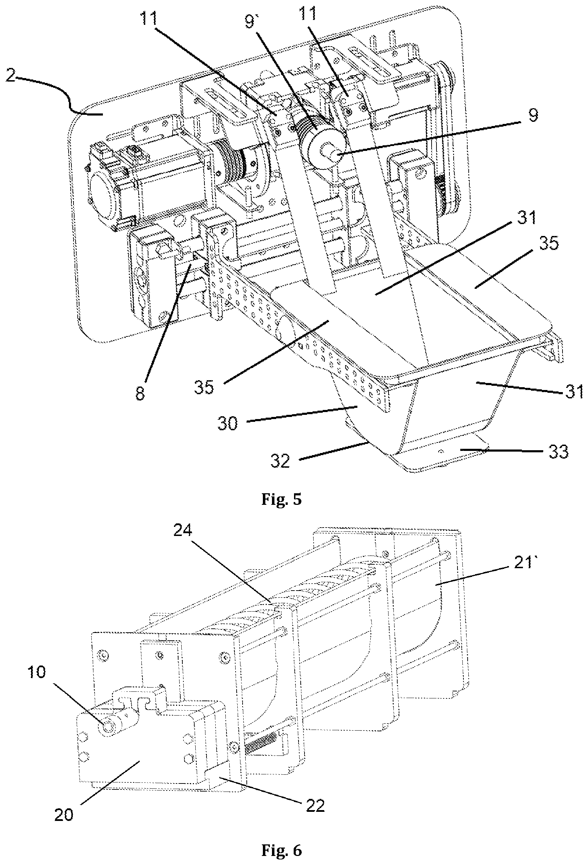

The proposed robotic cooking system, comprising: a robotic arm 1 (Fig. 1) with a controller and a motor drive unit, an end of arm tool 2; a plurality of ingredient holding and dispensing assemblies 20 (Fig. 2); a cooking receptacle 3, being configured to cook food ingredients placed therein (Fig. 3); dishes storing device 4 (Fig. 4); a tray 5 (Fig. 5). The robotic cooking system further comprises a cleaning subsystem 7' and 7" configured to clean the cooking receptacle 3 and the tray 5.

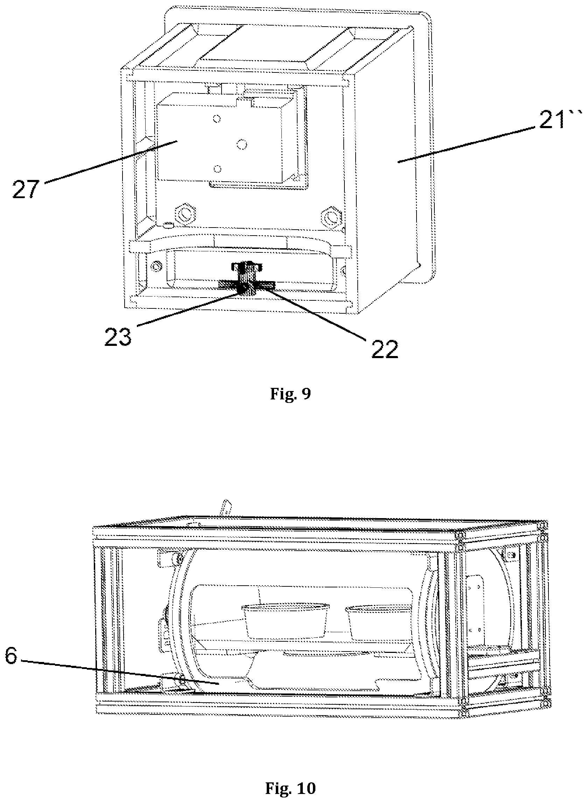

Each of the ingredient holding and dispensing assemblies comprises a container 21 for holding a supply of an ingredient and dispenser 22 (Fig. 6, Fig. 9) for dispensing an amount of the ingredient from a discharge 23 of the ingredient holding and dispensing assembly 20. The containers 21 for holding a supply of an ingredient comprise a plurality of containers adapted for holding a supply of liquid ingredients (such as water, milk, sauce) or viscous substance (such as oil, ketchup, mashed potato) - Fig. 9, and containers adapted for holding a supply of solid ingredients (such as pre-chopped meat, beans, rice, potato) - Fig. 6-8. The dispenser 22 is adapted to be actuated from a closed position to retain ingredients within the container, partly open position, and an open position such that ingredients are allowed to controllably fall through it or be controllably dispensed through it. The dispenser 22 can be controllable by a control means.

According to the invention, the end of arm tool 2 is further provided with one or more air nozzles 11 (Fig. 5) directed towards the inner part of the tray 5, so to create air flow along the surface of the tray 5 towards a discharge edge of the tray 5 to facilitate discharging food ingredients from the tray 5 to e.g. cooking receptacle 3.

The tray 5 is designed to receive food ingredients from the dispenser 22 and designed to be releasably gripped by the gripper 8 located on the end of arm tool 2. According to one embodiment the tray 5 has two parallel substantially vertical walls 30 (where the term "substantially" in the present description allows deviation to up to five degrees) and two inclined walls 31; where the two inclined walls 31, together with the tray's 5 bottom 32 form an arc, preferably a parabolic arc. The tray's 5 bottom 32 is fixed to a balancing or holding means 33 adapted to ensure stable placement of the tray 5 on the required surface in the robotic cooking system. The required surface can be flat and horizontal and can be inclined. The balancing or holding means 33 can be in the form of a plate, one or more strips, a magnet, or equivalent means.

The shape of the tray 5 allows to more effectively direct air flow paths from the air nozzles 11, along the surface of the tray 5 towards a discharge edge of the tray 5 to facilitate discharging food ingredients from the tray 5. Further, the tray 5 is provided with gripping area 34, adapted to be gripped by the gripper located on the end of arm tool 2. The gripping area 34 may be in the form of two horizontal bars 35 fixed to the upper part of the parallel substantially vertical walls 30, where the horizontal bars 35 are provided with engagement means for engaging with the gripper 8. The horizontal bars 35 are designed to create a protective edge to shield the robotic arm 1 electronics from spilling of food ingredients from the tray 5 as well as liquid during washing of the tray 5 in the cleaning subsystem 7' and 7".

The cooking receptacle 3 is configured to cook food ingredients placed therein (Fig. 3). The cooking receptacle 3 comprises a pot 12 designed for holding ingredients, one or more heaters 13 for induction heating the pot 12 and rotating means 15 for rotating the pot 12 about two or more rotational axis: for rotation of the pot 12 during cooking of the ingredients about an axis inclined at about 10-50 degrees from the vertical, so that the ingredients remain in the pot 12, as well as for rotation of the pot 12 in the vertical plane for discharging the ingredients into a servicing dish. According to one embodiment the pot 12 has a substantially spherical bottom and an opening in the upper part, which is adapted to receive food ingredients from the discharge edge of the tray 5 and the dispenser 22 of a container 21". The pot 12 preferably has a narrowing upper part designed to prevent spilling out of food ingredients from the tray 5 during rotation of the pot 12 in cooking position, when the pot 12 is inclined about 45-50 degrees from the verticality. The pot 12 further comprises one or two fins 14 adapted to be rotated inside the pot 12 in order to ensure uniform stirring of food ingredients in the pot 12, wherein the cooking receptacle 3 is designed to controllably rotate the fins 14 in the direction, which is opposite to the direction of rotation of the pot 12.

The dishes storing device 4 comprises a frame and means for holding dishes (e.g. disposable dishes), as well as means for supplying dishes towards the opening of the dishes storing device 4 and separating the dishes, so that they can be picked by the gripper 8 (Fig. 4).

The dish and food transfer area 6 is designed to serve cooked meals to a customer (Fig. 10). The dish and food transfer area 6 has one or more compartments, comprising at least an internal access door and at least one surface adapted for placing a dish or food therein. The dish and food transfer area 6 may further comprise an external access door.

The robotic arm 1 comprises an arm base, an arm, an end of arm tool 2, a gripper 8 attached to the arm. The end of arm tool 2, is further provided with a rotary drive 9 adapted to be releasably engaged with engagement means 10 of a plurality of the containers 21 for holding a supply of an ingredient designed so that at the engaged position the rotation of the rotary drive 9 of the end of arm tool 2 causes the dispenser 22 of the ingredient holding and dispensing assembly 20 to dispense an amount of the ingredient from the discharge 23 of the ingredient holding and dispensing assembly 20. The rotary drive 9 is provided with a flexible coupling 9' adapted to compensate misalignment and ensure easy entering of the end of the engaging part of the rotary drive 9 to the engagement means 10 of a plurality of the containers 21. The flexible coupling 9' can be in the form of bellow coupling, beam coupling, jaw coupling, Oldham coupling and other type. The end of arm tool 2 further comprising one or more load cells, adapted to provide a representation (e.g. digital) of a load thereon, the gripper 8 being directly or indirectly associated with said plurality of load cells. The gripper 8 of the end of arm tool 2 are designed to be able to pick out and securely relocate a servicing dish. To be able to securely relocate a servicing dish the gripper 8 has a cutout corresponding to a shape of the external part of the servicing dish.

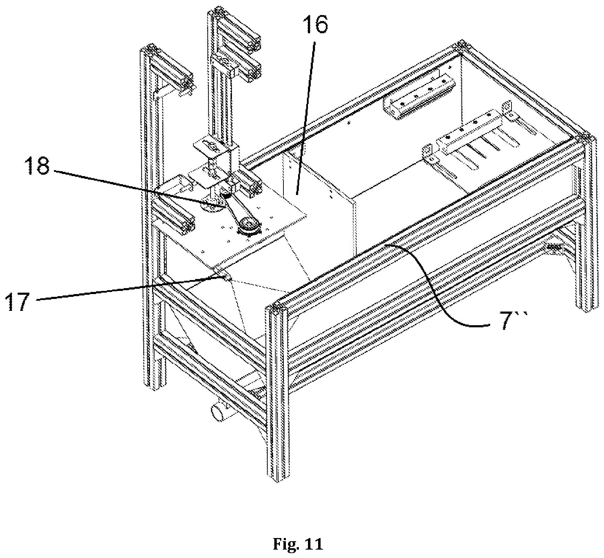

The cleaning subsystem comprises a subsystem 7' adapted to clean the cooking receptacle 3 (Fig. 3) and a subsystem 7" adapted to clean the tray 5 (Fig. 11). The subsystem 7" is designed in the form of a closed bath 16, having openings adapted to receive the tray 5. The bath 16 comprises a washing nozzle 17 operably fixed to a pump and means for moving the washing nozzle 18 substantially perpendicularly towards the washable surface of the tray 5. The means for moving the washing nozzle 18 are designed to be driven by the rotary drive 9. Thus, the means for moving the washing nozzle 18 are also provided with the engagement means 10, which are the same as the engagement means 10 of a plurality of the containers 21.

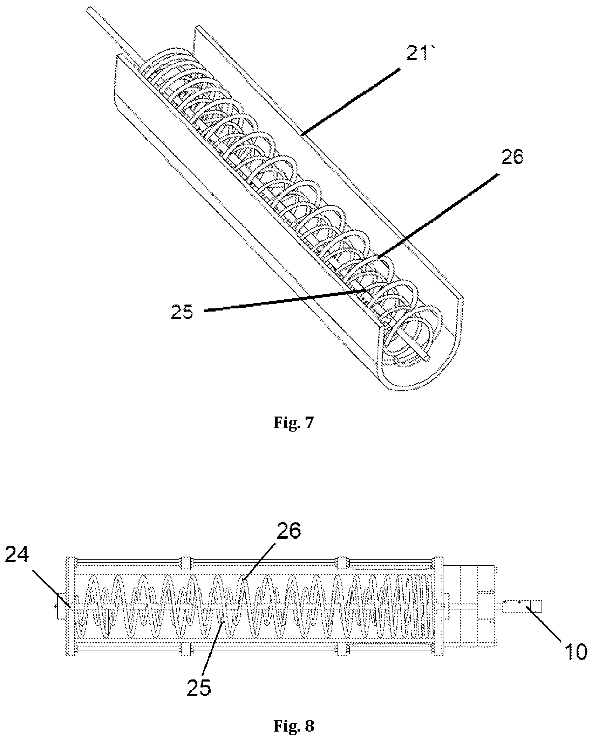

The subset of the plurality of ingredient holding and dispensing assemblies 20 comprises a container 21' with the dispenser 22 and a screw conveyor 24, adapted to controllably move fluent solid ingredients in the container 21' towards the dispenser 22. The screw conveyor 24 comprises two helically bladed screws: a central screw 25 and a peripheral screw 26, located around the central screw 25, both screws having the same rotational axis (Fig. 7-8). The helical blades of the screws 25 and 26 have opposite directions (left and right), so that as a result of rotation of a rotational shaft of the screws 25 and 26, the screws 25 and 26 force the contents of the container 21' to move in opposite directions: one towards the dispenser 22 and the other - in opposite direction. This solution prevents compaction and pressing of the ingredients in the container 21' (as it is in the case of the prior art screw conveyors, especially the ones, where the crossection of the dispenser outlet is smaller than the size of the crossection of the container comprising the screw). According to one embodiment the helical blades of the screws 25 and 26 are in the shape of a helical coil. A rotational shaft of both screws 25 and 26 is provided with engagement means 10 designed to be releasably engaged with the rotary drive 9 of the end of arm tool 2. The container 21' preferably has a U-shape crossection (Fig. 7).

The subset of the plurality of ingredient holding and dispensing assemblies 20 comprises a container 21" and a peristaltic pump 27, which drive is designed to be releasably engaged with the rotary drive 9 of the end of arm tool 2. Each container 21" is designed to allow the gripper 8 to grip and releasably fix the container 21", as well as to remove it from its storage location, bring it towards the cooking receptacle 3 and back to the storage location. According to the preferred embodiment, the container 21" is designed to accommodate a replaceable sealed receptacle operably connected with the peristaltic pump 27 and the dispenser 22 by means of flexible pipe.

The robotic cooking system may further comprise a ventilation, humidity and temperature controlling system adapted to ensure the pre-set level of humidity and temperature in the robotic cooking system.

## Claims

1. A robotic cooking system, comprising: a robotic arm (1) with a controller and a motor drive unit, an end of arm tool (2) with a gripper (8); a plurality of ingredient holding and dispensing assemblies (20), each of the ingredient holding and dispensing assemblies comprising a container (21) for holding a supply of an ingredient and dispenser (22) for dispensing an amount of the ingredient from a discharge (23) of the ingredient holding and dispensing assembly (20); a cooking receptacle (3), being configured to cook food ingredients placed therein; dishes storing device (4); a tray (5) adapted to receive food ingredients from the dispenser (22) and designed to be releasably gripped by the gripper (8); a dish and food transfer area (6) having at least one compartment; a cleaning subsystem (7' and 7") configured to clean the cooking receptacle (3) and the tray (5); wherein the end of arm tool (2) is further provided with a rotary drive (9) adapted to be releasably engaged with the engagement means (10) of a plurality of the containers (21) for holding a supply of an ingredient designed so that at the engaged position the rotation of the rotary drive (9) of the end of arm tool (2) causes the dispenser (22) of the ingredient holding and dispensing assembly (20) to dispense an amount of the ingredient from the discharge (23) of the ingredient holding and dispensing assembly (20); wherein the rotary drive (9) is provided with a flexible coupling (9') adapted to compensate misalignment and/or ensure easy entering of the end of the engaging part of the rotary drive (9) to the engagement means (10) of a plurality of the containers (21), wherein the end of arm tool (2) is further provided with one or more air nozzles (11) directed towards the inner part of tray (5), so to create air flow along the surface of the tray (5) towards a discharge edge of the tray (5) to facilitate discharging food ingredients from the tray (5).

2. The robotic cooking system according to claim 1, wherein a subset of the plurality of ingredient holding and dispensing assemblies (20) comprises a container (21') with the dispenser (22) and a screw conveyor (24), adapted to controllably move fluent solid ingredients in the container (21') towards the dispenser (22), wherein the screw conveyor (24) comprises two helically bladed screws: a central screw (25) and a peripheral screw (26), the peripheral screw (26) located around the central screw (25), both screws having the same rotational axis; wherein the helical blades of the screws (25 and 26) have opposite directions; a rotational shaft of both screws (25 and 26) is provided with engagement means (10) designed to be releasably engaged with the rotary drive (9) of the end of arm tool (2).

3. The robotic cooking system according to any preceding claims, wherein a subset of the plurality of ingredient holding and dispensing assemblies (20) comprises a container (21") and a peristaltic pump (27), which drive is designed to be releasably engaged with the rotary drive (9) of the end of arm tool (2); wherein each container (21") is designed to allow the gripper (8) to grip and releasably fix the container (21"), as well as to remove it from its storage location and return it back to the storage location.

4. The robotic cooking system according to any preceding claims, wherein the container (21") is designed to accommodate a replaceable sealed receptacle operably connected with the peristaltic pump (27) and the dispenser (22) by means of flexible pipe.

5. The robotic cooking system according to any preceding claims, wherein the cooking receptacle (3) comprises a pot (12) for holding ingredients, one or more heaters (13) for induction heating the pot (12) and rotating means (15) for rotating the pot (12) about two or more rotational axis, wherein the pot (12) is further provided with one or two fins (14) adapted to be rotated inside the pot (12) in order to ensure uniform stirring of food ingredients in the pot (12), wherein the cooking receptacle (3) is designed to controllably rotate the fins (14) in the direction, which is opposite to the direction of rotation of the pot (12).

6. The robotic cooking system according to any preceding claims, wherein the tray (5) is designed to have two parallel substantially vertical walls (30) and two substantially inclined walls (31); where the two inclined walls (31), together with the tray's (5) bottom (32) form an arc, preferably a parabolic arc.

7. The robotic cooking system according to any preceding claims, wherein the cleaning subsystem (7') is adapted to clean the cooking receptacle (3) and a subsystem (7") is adapted to clean the tray (5), wherein the subsystem (7") is designed in the form of a closed bath (16), having openings adapted to receive the tray (5), the bath (16) comprising a washing nozzle (17) operably fixed to a pump and means for moving the washing nozzle (18), wherein the means for moving the washing nozzle (18) are provided with the engagement means (10), which are the same as the engagement means (10) of a plurality of the containers (21), where the means for moving the washing nozzle (18) are designed to be driven by the rotary drive (9).

8. The robotic cooking system according to any preceding claims, wherein the tray (5) is further provided with gripping area (34), adapted to be gripped by the gripper (8), where the gripping area (34) is in the form of two horizontal bars (35) fixed to the upper part of the parallel substantially vertical walls (30), where the horizontal bars (35) are provided with engagement means for engaging with the gripper (8).

9. The robotic cooking system according to any preceding claims, wherein the end of arm tool (2) further comprising one or more load cells, adapted to provide a representation of a load on the gripper (8), the gripper (8) being directly or indirectly associated with said plurality of load cells.

## Patentansprüche

1. Roboter-Kochsystem, bestehend aus: einem Roboterarm (1) mit einer Steuerung und einer Motorantriebseinheit, einem Werkzeug (2) mit einem Greifer (8) am Ende des Arms; einer Vielzahl von Baugruppen (20) zum Halten und Ausgeben von Zutaten, wobei jede der Baugruppen zum Halten und Ausgeben von Zutaten einen Behälter (21) mit darin befindlichen Zutaten und eine Spender (22) zum Ausgeben einer Menge der Zutat aus einem Auslass (23) der Baugruppe (20) zum Halten und Ausgeben von Zutaten beinhaltet; einem Kochbehälter (3), der zum Kochen von darin platzierten Zutaten vorgesehen ist; einem Geschirrbehälter (4); einer Schale (5), die zur Aufnahme von Zutaten aus dem Spender (22) geeignet und so gestaltet ist, dass es von dem Greifer (8) lösbar gegriffen werden kann; einem Geschirr- und Lebensmitteltransferbereich (6) mit mindestens einem Fach; einem Reinigungssubsystem (7' und 7"), das für das Reinigen des Kochbehälters (3) und der Schale (5) ausgelegt ist. Das Werkzeug (2) am Ende des Arms ist ferner mit einem Drehantrieb (9) versehen, der lösbar mit den Griffen (10) einer Vielzahl von Behältern (21) mit darin befindlichen Zutaten in Eingriff gebracht werden kann, so dass in der Eingriffsposition die Drehung des Drehantriebs (9) des Werkzeugs (2) am Ende des Arms den Spender (22) der Baugruppe (20) zum Halten und Abgeben von Zutaten dazu veranlasst eine Menge der Zutat aus dem Auslass (23) der Baugruppe (20) zum Halten und Abgeben von Zutaten abzugeben. Der Drehantrieb (9) ist mit einer flexiblen Koppelung (9') versehen, die geeignet ist, eine Fehlausrichtung zu kompensieren und/oder ein leichtes Einführen des Eingriffsteil-Endstücks am Drehantrieb (9) in die Griffe (10) einer Vielzahl von Behältern (21) zu gewährleisten, wobei das Ende des Armwerkzeugs (2) ferner mit einer oder mehreren auf den inneren Teil der Schale (5) gerichteten Luftdüsen (11) ausgestattet ist, um so einen Luftstrom entlang der Oberfläche der Schale (5) in Richtung einer Ausstoßkante der Schale (5) zu erzeugen, um das Ausstoßen von Zutaten aus der Schale (5) zu erleichtern.

2. Roboter-Kochsystem gemäß Patentanspruch 1, wobei eine Untergruppe der Vielzahl von Zutatenhalte- und -spenderbaugruppen (20) aus einem Behälter (21') mit einem Spender (22) und einem Schneckenförderer (24) besteht, der dafür ausgelegt ist, flüssige oder feste Zutaten in dem Behälter (21') steuerbar zu dem Spender (22) zu bewegen. Der Schneckenförderer (24) beinhaltet dabei zwei schraubenförmig beschaufelte Schrauben: eine zentrale Schnecke (25) und eine periphere Schnecke (26), wobei die periphere Schnecke (26) um die zentrale Schnecke (25) herum angeordnet ist und beide Schnecken die gleiche Drehachse haben. Die schraubenförmigen Flügel der Schnecken (25 und 26) weisen dabei entgegengesetzte Richtungen auf. Eine Drehwelle beider Schnecken (25 und 26) ist mit Griffen (10) versehen, die so gestaltet sind, dass sie lösbar mit dem Drehantrieb (9) des Werkzeugs am Ende des Arms (2) in Eingriff gebracht werden können.

3. Roboter-Kochsystem gemäß einem der vorhergehenden Patentansprüche, wobei eine Untergruppe der Vielzahl von Zutatenhalte- und -spenderbaugruppen (20) einen Behälter (21") und eine peristaltische Pumpe (27) umfasst, deren Antrieb so ausgelegt ist, dass er lösbar mit dem Drehantrieb (9) des Werkzeugs am Ende des Arms (2) in Eingriff gebracht werden kann. Jeder Behälter (21") ist dabei so gestaltet, dass der Greifer (8) den Behälter (21") greifen und lösbar fixieren kann, sowie ihn von seinem Lagerort entfernen und zu dem Lagerort zurückbringen kann.

4. Roboter-Kochsystem gemäß einem der vorhergehenden Patentansprüche, wobei der Behälter (21") so ausgelegt ist, dass er einen austauschbaren, abgedichteten Behälter aufnehmen kann, der mit der peristaltischen Pumpe (27) und dem Spender (22) über ein biegsames Rohr funktionsfähig verbunden ist.

5. Roboter-Kochsystem gemäß einem der vorhergehenden Patentansprüche, wobei der Kochbehälter (3) einen Topf (12) zur Aufnahme von Zutaten, einen oder mehrere Heizvorrichtungen (13) zur Induktionserwärmung des Topfes (12) und eine Drehvorrichtung (15) zum Drehen des Topfes (12) um zwei oder mehr Drehachsen enthält, wobei der Topf (12) ferner mit einer oder zwei Lamellen (14) versehen ist, die geeignet sind, innerhalb des Topfes (12) gedreht zu werden, um ein gleichmäßiges Umrühren von Zutaten in dem Topf (12) zu gewährleisten. Das Kochgefäß (3) ist dabei so ausgelegt, dass es die Lamellen (14) steuerbar in die Richtung dreht, die der Drehrichtung des Topfes (12) entgegengesetzt ist.

6. Roboter-Kochsystem gemäß einem der vorhergehenden Patentansprüche, wobei die Schale (5) so gestaltet ist, dass sie zwei parallele, im Wesentlichen vertikale Wände (30) und zwei im Wesentlichen geneigte Wände (31) aufweist. Die beiden geneigten Wände (31) bilden dabei zusammen mit dem Boden (32) der Schale (5) einen Bogen, vorzugsweise einen Parabelbogen.

7. Roboter-Kochsystem gemäß einem der vorhergehenden Patentansprüche, mit einem vorhandenen Reinigungsteilsystem (7') zum Reinigen des Kochbehälters (3) und einem Teilsystem (7") zum Reinigen der Schale (5). Das Teilsystem weist (7") die Form einer geschlossenen Wanne (16) auf, mit Öffnungen zur Aufnahme der Schale (5), wobei die Wanne (16) eine mit einer Pumpe funktionsfähig verbundene Waschdüse (17) und Mittel zum Bewegen der Waschdüse (18) aufweist. Die Mittel zum Bewegen der Waschdüse (18) sind mit Griffen (10) versehen, die die gleichen sind wie die Griffe (10) der Vielzahl der Behälter (21), wobei die Mittel zum Bewegen der Waschdüse (18) für den Antrieb durch einen Drehantrieb (9) vorgesehen sind.

8. Roboter-Kochsystem gemäß einem der vorangehenden Patentansprüche, wobei die Schale (5) ferner mit einem Greifbereich (34) versehen ist, der dazu geeignet ist, von dem Greifer (8) ergriffen zu werden. Der Greifbereich weist dabei (34) die Form von zwei horizontalen Stangen (35) auf, die an dem oberen Teil der parallelen, im Wesentlichen vertikalen Wände (30) befestigt sind. Die horizontalen Stangen (35) sind mit Griffen zum Greifen mit dem Greifer (8) versehen.

9. Roboter-Kochsystem gemäß einem der vorangehenden Patentansprüche, wobei das Werkzeug (2) am Ende des Arms weiterhin einen oder mehrere Aufnehmer umfasst, die geeignet sind, dem Greifer (8) eine Ladung zu liefern. Der Greifer (8) ist dabei direkt oder indirekt mit der Vielzahl von Aufnehmern verbunden ist.

## Revendications

1. Système de cuisson robotisé, comprenant: un bras robotisé (1) avec un dispositif de commande et une unité d'entraînement de moteur, un outil d'extrémité de bras (2) avec un organe de préhension (8) ; une pluralité d'ensembles de retenue et de distribution d'ingrédients (20), chacun des ensembles de retenue et de distribution d'ingrédients comprenant un récipient (21) pour retenir une alimentation d'un ingrédient et un distributeur (22) permettant de distribuer une quantité de l'ingrédient à partir d'une évacuation (23) de l'ensemble de retenue et de distribution d'ingrédients (20) ; un réceptacle de cuisson (3), étant conçu pour cuire des ingrédients alimentaires placés à l'intérieur de celui-ci ; un dispositif de stockage de vaisselle (4) ; un plateau (5) adapté pour recevoir des ingrédients alimentaires en provenance du distributeur (22) et destiné à être pris de manière libérable par l'organe de préhension (8); une zone de transfert de vaisselle et d'aliments (6) ayant au moins un compartiment; un sous-système de nettoyage (7' et 7") conçu pour nettoyer le réceptacle de cuisson (3) et le plateau (5) ; dans lequel l'outil d'extrémité de bras (2) est en outre pourvu d'un entraînement rotatif (9) adapté pour être mis en prise de manière libérable avec les moyens de mise en prise (10) d'une pluralité des récipients (21) pour retenir une alimentation d'un ingrédient conçu de sorte qu'à la position en prise la rotation de l'entraînement rotatif (9) de l'outil d'extrémité de bras (2) amène le distributeur (22) de l'ensemble de retenue et de distribution d'ingrédients (20) à distribuer une quantité de l'ingrédient à partir de l'évacuation (23) de l'ensemble de retenue et de distribution d'ingrédients (20) ; dans lequel l'entraînement rotatif (9) est pourvu d'un accouplement flexible (9') adapté pour compenser un désalignement et/ou assurer une entrée aisée de l'extrémité de la partie de mise en prise de l'entraînement rotatif (9) dans les moyens de mise en prise (10) d'une pluralité des récipients (21), dans lequel l'outil d'extrémité de bras (2) est en outre pourvu d'une ou plusieurs buses d'air (11) dirigées vers la partie intérieure du plateau (5), de façon à créer un flux d'air le long de la surface du plateau (5) en direction d'un bord d'évacuation du plateau (5) pour faciliter l'évacuation d'ingrédients alimentaires du plateau (5).

2. Système de cuisson robotisé selon la revendication 1, dans lequel un sous-ensemble de la pluralité d'ensembles de retenue et de distribution d'ingrédients (20) comprend un récipient (21') avec le distributeur (22) et un convoyeur à vis (24), adapté pour déplacer de manière commandée des ingrédients solides fluides dans le récipient (21') en direction du distributeur (22), dans lequel le convoyeur à vis (24) comprend deux vis à lame hélicoïdale : une vis centrale (25) et une vis périphérique (26), la vis périphérique (26) étant localisée autour de la vis centrale (25), l'une et l'autre des vis ayant le même axe de rotation ; dans lequel les lames hélicoïdales des vis (25 et 26) ont des directions opposées ; un arbre de rotation de l'une et l'autre des vis (25 et 26) est pourvu de moyens de mise en prise (10) destinés à être mis en prise de manière libérable avec l'entraînement rotatif (9) de l'outil d'extrémité de bras (2).

3. Système de cuisson robotisé selon de quelconques revendications précédentes, dans lequel un sous-ensemble de la pluralité d'ensembles de retenue et de distribution d'ingrédients (20) comprend un récipient (21") et une pompe péristaltique (27), cet entraînement étant destiné à être mis en prise de manière libérable avec l'entraînement rotatif (9) de l'outil d'extrémité de bras (2) ; dans lequel chaque récipient (21") est destiné à permettre à l'organe de préhension (8) de prendre et de fixer de manière libérable le récipient (21"), ainsi que de le retirer de sa localisation de stockage et le ramener à sa localisation de stockage.

4. Système de cuisson robotisé selon de quelconques revendications précédentes, dans lequel le récipient (21") est conçu pour recevoir un réceptacle scellé remplaçable relié fonctionnellement à la pompe péristaltique (27) et au distributeur (22) au moyen d'un tuyau flexible.

5. Système de cuisson robotisé selon de quelconques revendications précédentes, dans lequel le réceptacle de cuisson (3) comprend une casserole (12) permettant de retenir des ingrédients, un ou plusieurs éléments chauffants (13) pour un chauffage par induction de la casserole (12) et des moyens de rotation (15) permettant de mettre en rotation la casserole (12) autour de deux axes de rotation ou plus, dans lequel la casserole (12) est en outre pourvue d'une ou deux ailettes (14) adaptées pour être mises en rotation à l'intérieur de la casserole (12) afin d'assurer une agitation homogène des ingrédients alimentaires dans la casserole (12), dans lequel le réceptacle de cuisson (3) est destiné à mettre en rotation de manière commandée les ailettes (14) dans la direction, qui est opposée à la direction de rotation de la casserole (12).

6. Système de cuisson robotisé selon de quelconques revendications précédentes, dans lequel le plateau (5) est destiné à avoir deux parois parallèles sensiblement verticales (30) et deux parois sensiblement inclinées (31) ; où les deux parois inclinées (31), conjointement avec le fond (32) du plateau (5) forment un arc, de préférence un arc parabolique.

7. Système de cuisson robotisé selon de quelconques revendications précédentes, dans lequel le sous-système de nettoyage (7') est adapté pour nettoyer le réceptacle de cuisson (3) et un sous-système (7") est adapté pour nettoyer le plateau (5), dans lequel le sous-système (7") est conçu sous la forme d'un bain fermé (16), ayant des ouvertures adaptées pour recevoir le plateau (5), le bain (16) comprenant une buse de lavage (17) fixée fonctionnellement à une pompe et à des moyens de déplacement de la buse de lavage (18), dans lequel les moyens de déplacement de la buse de lavage (18) sont pourvus des moyens de mise en prise (10), qui sont les mêmes que les moyens de mise en prise (10) d'une pluralité des récipients (21), où les moyens de déplacement de la buse de lavage (18) sont destinés à être entraînés par l'entraînement rotatif (9).

8. Système de cuisson robotisé selon de quelconques revendications précédentes, dans lequel le plateau (5) est en outre pourvu d'une zone de préhension (34), adaptée pour être prise par l'organe de préhension (8), où la zone de préhension (34) est sous la forme de deux barres horizontales (35) fixées à la partie supérieure des parois parallèles sensiblement verticales (30), où les barres horizontales (35) sont pourvues de moyens de mise en prise pour venir en prise avec l'organe de préhension (8).

9. Système de cuisson robotisé selon de quelconques revendications précédentes, dans lequel l'outil d'extrémité de bras (2) comprend en outre une ou plusieurs cellules de charge, adaptées pour fournir une représentation d'une charge sur l'organe de préhension (8), l'organe de préhension (8) étant directement ou indirectement associé à ladite pluralité de cellules de charge.
